# EUROPÄISCHE PATENTSCHRIFT

(11) **EP 1 413 430 B1**
(45) Veröffentlichungstag und Bekanntmachung des Hinweises auf die Patenterteilung: **22.06.2005**
(21) Anmeldenummer: 02029071.4
(22) Anmeldetag: 01.01.2003
(51) Int. Cl.: B32B 31/08, B32B 7/12

(54) **Textilbeschichtungs- und Textillaminier-Produktionsanlage mit verschiedenen Auftragsverfahren**
Production unit for coating and laminating textiles by using different coating methods
Unité de production pour revêtir et laminer des textiles par différents procédés de revêtement

(30) Priorität: 21.10.2002 EP 02023645
(43) Veröffentlichungstag der Anmeldung: 28.04.2004
(73) Patentinhaber: IMATEP S.A., 1700 Fribourg (CH)
(72) Erfinder:
(74) Vertreter: Grünecker, Kinkeldey, Stockmair & Schwanhäusser Anwaltssozietät

(56) Entgegenhaltungen:
- WO-A-01/71090
- US-A- 3 533 886
- US-A- 5 492 591
- DUBOIS A ET AL: "ENDUCTION ET CONTRECOLLAGE" INDUSTRIE TEXTILE, INDUSTRIE TEXTILE. PARIS, FR, Nr. 1317, Februar 2000 (2000-02), Seiten 53-57, XP000970241 ISSN: 0019-9176

## Beschreibung

Die Erfindung betrifft eine Textilbeschichtungs- und Textillaminier-Produktionsanlage zum Herstellen von beschichteten Substraten und Mehrschichtlaminaten und mit mindestens einem textilen Substrat, mit mehreren Zuführeinheiten zum Zuführen flexibler Substrate, einschließlich des textilen Substrats, und mindestens zwei Auftragsverfahrensstationen für Klebemittel zum Ausführen von mindestens zwei verschiedenen Auftragsverfahren, sowie Einrichtungen zum Herstellen von Mehrschichtlaminaten und beschichteten Substraten.

Mehrschichttextillaminate und beschichtete Substrate werden in einer Vielzahl von Ausführungen für die unterschiedlichsten Einsatzgebiete hergestellt. Die Einsatzgebiete reichen von z. B. Automobilanwendungen über die Polstermöbelherstellung bis hin zu Bau- und Medizinalanwendungen. Neben herkömmlichen einfachen Textillaminaten aus zwei Laminatschichten steigt der Bedarf an Mehrschichttextillaminaten ständig. Mehrschichttextillaminate können durch ihre verschiedenen Laminatschichten unterschiedliche Funktionen während der Weiterverarbeitung und der späteren Nutzung erfüllen. Auch ergibt sich durch die Möglichkeit mehrere Laminatschichten für den optischen Eindruck des Textillaminats zu nutzen, eine große Bandbreite an Oberflächen und Kaschierungen.

Sowohl das Aussehen als auch die Funktion von Textillaminaten, insbesondere von Mehrschichtlaminanten ist abhängig von den eingesetzten Substratschichten und den verwendeten Klebemitteln und deren Auftragsverfahren, aber auch von der Anordnung der Substratschichten, d.h. ob eine Funktions- oder Textilschicht als oberste, unterste oder als eine mittlere Laminatschicht angeordnet ist. Neben dieser Vielfalt von Anordnungen und Kombinationen verschiedenster Substrate und unterschiedlichster Klebemittelschichten, vom dispersions- und lösemittelhaltigen Klebemitteln über thermoplastische oder reaktive Schmelzkleber bis hin zu pulverförmigen Klebemitteln, Klebevliesen oder Klebefilmen, aber auch die steigende Anzahl von Anwendungen und die Verbreiterung der Laminatfunktionen bei bisherigen Anwendungen führt zur deutlich gestiegenen Anforderung in der Produktion von Textillaminaten.

Die WO 01/71090 A1 beschreibt eine Auftragsvorrichtung zum Verkleben von zwei Textilien mit einer sehr dünnen Heißkleberschicht, wobei zur Aktivierung des Klebefilms Klebehilfsmittel in Pulver- oder flüssiger Form aufgetragen werden.

Typischerweise beschränken sich Hersteller von Textillaminaten und beschichteten Substraten auf bestimmte Marktsegmente, bzw. auf die Verarbeitung bestimmter Substrate und Klebemittel mittels einem bestimmten Auftragsverfahren. Dadurch wird der beim einzelnen Hersteller notwendige Aufwand an Produktionsanlagen beschränkt, wodurch sich die Amortisation des Kapitaleinsatzes für die Produktionsanlagen verbessert. Die steigende Anzahl von Variationen in den Anwendungen, besonders im Bereich der Mehrschichttextillaminate führt jedoch dazu, dass zur Abdeckung mehrerer Marktsegmente unterschiedliche Auftragsverfahren und damit unterschiedliche Produktionsanlagen notwendig sind, was zu einer schlechteren Amortisation der einzelnen Produktionsanlagen führt.

Der vorliegenden Erfindung liegt daher die Aufgabe zugrunde, eine Textilbeschichtungs- und Laminier-Produktionsanlage bereit zu stellen, die den heutigen Anforderungen hinsichtlich der Flexibilität in der Materialauswahl und den Funktionen der hergestellten Textillaminate und beschichteten Substrate, aber auch eine notwendigen Kostenreduzierung gerecht wird.

Erfindungsgemäß wird diese Aufgabe bei einer gattungsgemäßen Textilbeschichtungs- und Laminier-Produktionsanlage durch eine Ausgestaltung nach dem Kennzeichen des Anspruchs 1 gelöst.

In der erfindungsgemäßen Textilbeschichtungs- und Textillaminier-Produktionsanlage können Mehrschichttextillaminate bei denen mindestens zwei verschiedene Auftragsverfahrensstationen für Klebemittel notwendig sind, in einem Produktionsablauf hergestellt werden. Diese Produktionsanlage bietet vielfältige Möglichkeiten Substrate und Klebemittel miteinander zu kombinieren und somit den Einsatzbereich der Anlage, aber auch die mit dieser Anlage herstellbaren Mehrschichtlaminate und Laminatfunktionen zu verbreitern. Diese erfindungsgemäße Produktionsanlage ermöglicht somit auch durch die Kombination von mehreren unterschiedlichen Auftragsverfahrensstationen für Klebemittel die Herstellung einer großen Bandbreite von Mehrschichttextillaminaten mit mindestens einer textilen Schicht. Dabei können die unterschiedlichen Auftragsverfahrensstationen, wenn sie für die Herstellung eines bestimmten Mehrschichttextillaminats nicht benötigt werden, außer Funktion gesetzt werden, wobei das Textillaminat oder beschichtete Substrat durch diese in der Produktionsanlage verbleibenen Auftragsverfahrensstationen neutral hindurchgeführt wird. Dadurch ist es möglich, unterschiedlichste Mehrschichttextillaminate zu produzieren, ohne einen Umbau der Produktionsanlage vornehmen zu müssen. Die erfindungsgemäße Textilbeschichtungs- und Laminier-Produktionsanlage kann die Produktionszeit, und damit auch die Produktionskosten von Mehrschichttextillaminaten wesentlich reduzieren, da sie mehr als zwei Substrate in einem Arbeitsdurchgang laminieren kann und weil nicht für jedes Klebemittel-Auftragsverfahren eine getrennte Produktionsanlage eingesetzt bzw. in diese investiert werden muss.

Bevorzugt können die Auftragsverfahrensstationen jeweils als austauschbare Moduleinheiten ausgebildet sein. Der Austausch der modularen Auftragsverfahrensstationen ermöglicht es mit der erfindungsgemäßen Textilbeschichtungs- und Laminier-Produktionsanlage Mehrschichttextillaminate mit unterschiedlichen Funktionen, die unterschiedliche Kombinationen von Klebemitteln erfordern, zu realisieren.

Um ebenso die Zuführeinheiten zu ersetzen oder austauschen zu können, und auch um spezielle Zuführeinheiten für besondere Laminatsubstrate integrieren zu können, können die Zuführeinheiten jeweils als austauschbare Moduleinheiten ausgebildet sein.

Verschiedene Varianten der Produktionsanlage sehen vor, dass eine der Auftragsverfahrensstationen als Sprüheinheit zum Auftragen von Dispersionsklebemitteln oder lösungsmittelhaltigen Klebemitteln, als Sprüheinheit zum Auftragen von thermoplastischen oder reaktiven Schmelzklebemitteln, als Trockenauftragseinheit zum Auftragen von pulverförmigen Klebemitteln, als Zuführeinheit zum Auftragen von Klebevliesen oder Klebefilmen, oder zum Ausführen eines Gravurwalzentechnik-Verfahren ausgebildet ist. Hierdurch ist eine große Flexibilität der Produktionsanlage gegeben.

Eine zweckmäßige Ausführungsform sieht vor, dass eine als austauschbare Moduleinheit ausgebildete Aufwicklungseinheit vorgesehen ist. Die Aufwicklungseinheit ermöglicht zum Abschluss der Produktion das Aufwickeln des hergestellten Mehrschichttextillaminats.

Vorteilhafterweise kann eine als austauschbare Moduleinheit ausgebildete Einheit zum Erwärmen und/oder Trocknen der Substrate und Klebemittel vorgesehen sein. Durch die Einheit können die aufgebrachten Klebemittel, z.B. pulverförmige Klebemittel, Klebevliese oder Klebefilme, erwärmt werden, wodurch ihre Klebefunktion aktiviert wird und sie zwei Substratschichten miteinander verkleben können. Neben den in Produktionsanlagen häufig eingesetzten IR-Wärmestrahlem sind auch konvektive oder wärmeleitende Verfahren oder eine Kombination von Verfahren für die Heizeinheit einsetzbar.

Ein Vorteil ist weiter, dass eine als austauschbare Moduleinheit ausgebildete Abkühlungseinheit vorgesehen ist. Die Abkühlungseinheit, z.B. eine Kühltrommel, ermöglicht bei der Herstellung das Mehrschichttextillaminat abzukühlen und die während der Produktion aufgebrachte Wärme wieder abzuleiten. Besonders vor dem Aufwickeln des Textillaminats kann eine Abkühlung ein Verschieben der Laminatschichten zueinander und ein Verkleben des aufgewickelten Textillaminats vermeiden.

Eine optimale Wärmeabfuhr kann, besonders bei Textillaminaten mit einem hohen Wärmeinhalt erreicht werden, wenn, gemäß einer Variante die Abkühlungseinheit eine flüssigkeitsgekühlte Trommel umfasst.

Um mit einem geringen konstruktiven Aufwand eine gute Wärmeabfuhr ermöglichen zu können, kann die Abkühlungseinheit eine gelochte Trommel umfassen.

Für eine gute Verbindung von zwei Substraten miteinander, müssen nach der zweiten Zuführeinheit Kalandrierwalzen vorgesehen sein. Durch die Kalandrierwalzen werden zwei Substrate mit der zwischen den Substraten angeordneten Klebemittelschicht durch eine obere und eine untere Kalandrierwalze miteinander verpresst, wodurch sich zwischen den Substraten eine gut haftende Verbindung bildet.

Günstigerweise sind die Moduleinheiten gegeneinander austauschbar ausgebildet. Durch die Austauschbarkeit der Moduleinheiten sind die Montage- und Reparaturkosten, sowie Montagefehler verringert. Die Austauschbarkeit der Moduleinheiten ermöglicht auch die Anordnung der Zuführeinheiten und Auftragsverfahrensstationen sowie weiterer Moduleinheiten in Abhängigkeit der jeweiligen Produktionsanforderungen zu gestalten. Auch können durch die Ausbildung der Zuführeinheiten, Auftragsverfahrensstationen und weiteren Funktionseinheiten der Textilbeschichtungs- und Laminier-Produktionsanlage als austauschbare Moduleinheiten bei der Herstellung von Mehrschichtlaminaten nicht benötigte Moduleinheiten durch andere benötigte Moduleinheiten ausgewechselt werden. Diese Ausbildung erhöht nochmals die Variationsmöglichkeiten der erfindungsgemäßen Textilbeschichtungs- und Textillaminier-Produktionsanlage, da sich bei Bedarf Moduleinheiten mit besonderen Funktionen entsprechend den Anforderungen der zu produzierenden Mehrschichttextillaminate in die Produktionsanlage integrieren lassen. So können auch neue Auftragsverfahren oder auch bisher im Bereich der Produktion von Mehrschichttextillaminaten nicht, oder nur in Einzelfällen, angewendete Bearbeitungstechniken, in die erfindungsgemäße Produktionsanlage integriert werden.

Eine vorteilhafte Ausgestaltung sieht vor, dass die Moduleinheiten eine Rahmenkonstruktion umfassen. Durch die Rahmenkonstruktion wird eine sichere Aufnahme und Befestigung der Zuführeinheiten und Auftragsverfahrensstationen sowie weiterer Funktionseinheiten in der jeweiligen Moduleinheit realisiert.

Eine günstige Ausführungsform sieht vor, dass die Moduleinheiten mit Rahmenkonstruktion eine gleiche Länge und eine gleiche Höhe aufweisen. Durch die Verwendung von Moduleinheiten mit einer gleichen Länge und einer gleichen Höhe können die Rahmenkonstruktionen besonders einfach miteinander verbunden werden. Die Textilbeschichtungs- und Laminier-Produktionsanlage ist dadurch in der Art eines Baukastenprinzips aus den Moduleinheiten zusammensetzbar.

Eine vorteilhafte Ausgestaltung sieht vor, dass die Moduleinheiten mit Rahmenkonstruktion aber auch mehrere miteinander verbundene Moduleinheiten Masse aufweisen, die durch die Türöffnung eines Standardcontainers (nach ISO-Norm) in den Container eingebracht und transportiert werden können. Dadurch kann beim Transport der Textilbeschichtungs- und Laminier-Produktionsanlage oder einzelner Moduleinheiten auf eine besondere Maschinenverpackung für den Transport verzichtet werden. Auf diese Weise kann die Produktionsanlage fertig montiert oder teilmontiert an einen Kunden ausgeliefert werden. Durch die Konstruktion der Textilbeschichtungs- und Textillaminier-Produktionsanlage in modularen Einheiten wird eine hohe Bedienerfreundlichkeit und ein übersichtlicher Materialablauf ermöglicht. Zusammen mit einem horizontalen Produktionsdurchlauf kann dadurch die Notwendigkeit der Beschickung der Anlage durch einen Kran vermieden werden. Alle Funktionsteile und Module sind gut zugänglich.

Der Austausch der einzelnen Auftragungsverfahrensstationen kann besonders einfach dadurch realisiert werden, dass für die Auftragungsverfahrensstationen eine Einheitslänge definiert ist, die der Länge der kürzesten Auftragsverfahrensstation entspricht und im Wesentlichen sämtliche anderen Auftragungsverfahrensstationen eine Länge aufweisen, die der Einheitslänge oder einem ganzzahligen Vielfachen von dieser Einheitslänge entspricht. Beim Austausch können die Auftragungsverfahrensstationen einfach aus der Produktionsanlage herausgezogen und durch eine andere Auftragsverfahrensstationen oder mehrere Stationen ersetzt werden.

Ein Ausführungsbeispiel sieht vor, dass folgende Moduleinheiten-Reihenfolge vorgesehen ist: erste Zuführeinheit; erste Auftragsverfahrensstation für ein erstes Auftragsverfahren; zweite Zuführeinheit; erste Kalandrierwalzeneinheit; zweite Auftragsverfahrensstation für ein zweites verschiedenes Auftragsverfahren; Erwärmungseinheit; dritte Zuführeinheit; zweite Kalandrierwalzeneinheit; Abkühlungseinheit; und Aufwicklungseinheit. Diese Reihenfolge der Moduleinheiten ist für eine Vielzahl von Mehrschichtextillaminaten geeignet.

Eine bevorzugte Modifikation sieht vor, dass die erste Auftragsverfahrensstation zwei als austauschbare Moduleinheiten ausgebildete Auftragsverfahren umfasst. Diese Ausbildung der Produktionsanlage ermöglicht ohne einen Austausch von Auftragsverfahrensstationen eine große Flexibilität bei der Herstellung von beschichteten Substraten und Mehrschichtlaminaten.

Eine weitere Ausgestaltung der Produktionsanlage sieht vor, dass die als Zuführeinheit zum Auftragen von Klebevliesen oder Klebefilmen ausgebildete zweite Auftragsverfahrensstation, die Erwärmungseinheit und die dritte Zuführeinheit als eine Moduleinheit ausgebildet sind. Die Kombination dieser Funktionen in einer Moduleinheit ermöglicht es die Anzahl der Module in der Produktionsanlage zu verringern und damit eine kompaktere Gesamtanlage zu realisieren.

Zur Vermeidung von Luftbelastungen am Aufstellungsort der Produktionsanlage können zumindestens eine der Auftragsverfahrensstationen (z.B. die als Sprüheinheit ausgebildete erste Auftragsverfahrensstation) und die Erwärmungseinheit Abzugsvorrichtungen aufweisen. Die Ausgasungen der Klebemittel werden durch die Abzugsvorrichtungen aufgefangen und abgeführt.

Um eine möglichst große Variation von Kombinationen von Substraten und Klebemitteln für Mehrschichttextillaminate zu ermöglichen, können die Moduleinheiten in ihrer Reihenfolge austauschbar ausgebildet sein.

Eine vorteilhafte Ausbildung der Textilbeschichtungs- und Laminier-Produktionsanlage sieht vor, dass die Textilbeschichtungs- und Laminier-Produktionsanlage mit einer SPS-Steuerung ausgestaltet ist. Durch eine SPS-Steuerung können Störungen oder Fehler in einzelnen Moduleinheiten schnell und sicher lokalisiert werden, wodurch Stillstandszeiten der Produktionsanlage minimiert werden. Dabei kann die SPS-Steuerung auch an eine Fernüberwachung angeschlossen sein.

Darüber hinaus bezieht sich die vorliegende Erfindung auf ein Verfahren zum Herstellen von Mehrschichtlaminaten in einer Textilbeschichtungs- und Textillaminier-Produktionsanlage nach einem der Ansprüche 1 bis 21, bei dem mehrere Substrate einschließlich mindestens eines textilen Substrats, unter Zwischenfügen einer Klebemittelschicht miteinander verbunden werden und die Klebemittelschicht vor dem Zusammenführen von zwei Substraten aufgebracht wird, wobei in einem Durchlauf mindestens zwei verschiedene Klebemittel-Auftragsverfahren angewendet werden. Dabei wird in einem Durchlauf auf ein erste flexibles Substrat in einem ersten Auftragsverfahren eine erste Klebemittelschicht aufgetragen, ein zweites flexibles Substrat zugeführt, und das erste und zweite flexible Substrat miteinander verbunden, und in einem zweiten, vom ersten Auftragsverfahren verschiedenen Auftragsverfahren, eine zweite Klebemittelschicht aufgetragen, dem ein drittes flexibles Substrat zugeführt wird, wobei die zweite Klebemittelschicht von der ersten Klebemittelschicht durch ein Substrat getrennt ist. Mit diesem Verfahren wird ein Mehrschichttextillaminat mit mindestens zwei in verschiedenen Auftragsverfahren aufgetragenen Klebemittelschichten in einem Produktionsdurchlauf und damit in einer reduzierten Produktionszeit zu geringeren Kosten hergestellt.

Im Folgenden wird eine Ausführungsform der vorliegenden Erfindung anhand einer Zeichnung näher erläutert. Es zeigen:
- Fig. 1: eine Seitenansicht der erfindungsgemäßen Textilbeschichtungs- und Textillaminier-Produktionsanlage,
- Fig. 2: eine Seitenansicht der in Fig. 1 gezeigten Produktionsanlage im Betriebszustand mit zugeführten Substraten, Klebemittelauftrag und dem produzierten Mehrschichtlaminat, und
- Fig. 3: eine Seitenansicht einer weiteren Ausführung der erfindungsgemäßen Textilbeschichtungs- und Textillaminier-Produktionsanlage.

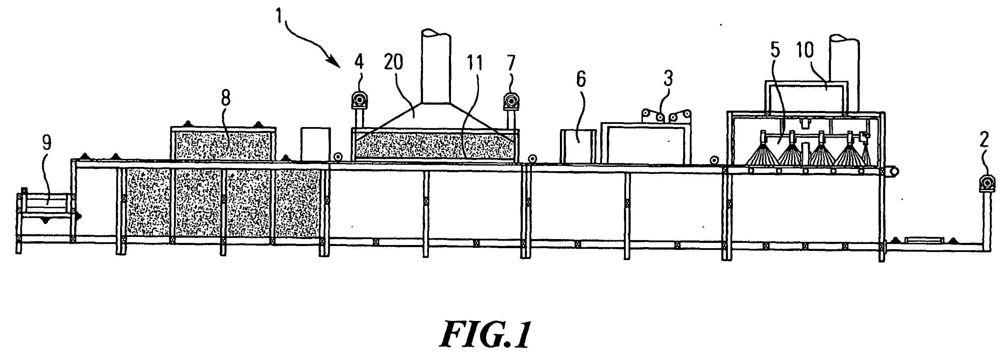

Die in den Figuren dargestellten erfindungsgemäßen Textilbeschichtungs- und Textillaminier-Produktionsanlagen 1 sind in modularer Bauweise mit austauschbaren Moduleinheiten ausgeführt. Die Produktionsanlage in Fig. 1 weist drei Zuführeinheiten 2, 3, 4 zum Zuführen flexibler Substrate und drei Auftragsverfahrensstationen 5, 6, 7 zum Auftragen von Klebemitteln auf. An einem äußeren Ende der Produktionsanlage 1 ist die erste Zuführeinheit 2 angeordnet. Der ersten Zuführeinheit 2 folgt die erste Auftragsverfahrensstation 5 und darauf die zweite Zuführeinheit 3 zum Zuführen flexibler Substrate. Dabei ist die erste Auftragsverfahrensstation 5 als Sprüheinheit zum Auftragen von Dispersionsklebemitteln und lösemittelhaltigen Klebemitteln oder zum Auftragen von thermoplastischen oder reaktiven Schmelzklebemitteln (Hotmelts) ausgestaltet. Der zweiten Zuführeinheit 3 schließen sich eine Trockenauftragseinheit 6 zum Auftragen von pulverförmigen Klebemitteln sowie eine Trockenauftragseinheit 7 an. Die Trockenauftragseinheit 7 ist als Zuführeinheit zum Auftragen von Klebevliesen und Klebefilmen ausgebildet. Den Trockenauftragseinheiten 6 und 7 ist eine Heizeinheit 11 mit IR-Wärmestrahlem und die dritte Zuführeinheit 4 nachgeschaltet. Der letzten Zuführeinheit 4 folgt eine Abkühlungseinheit 8 und anschließend am zweiten äußeren Ende der Produktionsanlage 1 eine Aufwicklungseinheit 9. Sowohl die Sprüheinheit 5 als auch die IR-Heizeinheit 11 sind mit Abzugsvorrichtungen 10, 20 ausgestaltet. Die erste Zuführeinheit 2, die als Sprüheinheit ausgebildete erste Auftragsverfahrensstation 5, die Abkühlungseinheit 8 und die Aufwicklungseinheit 9 sind als einzelne Moduleinheiten ausgebildet, während die zweite Zuführeinheit 3 und die Trockenauftragseinheit 6 sowie die Trockenauftragseinheit 7, die Heizeinheit 11 und die dritte Zuführeinheit 4 als zwei kombinierte Moduleinheiten ausgebildet sind. Die Moduleinheiten umfassen jeweils eine Rahmenkonstruktion aus horizontalen und vertikalen Trägern, wobei sich die Moduleinheiten mit den seitlichen vertikalen Trägem berühren und dort miteinander verbunden werden.

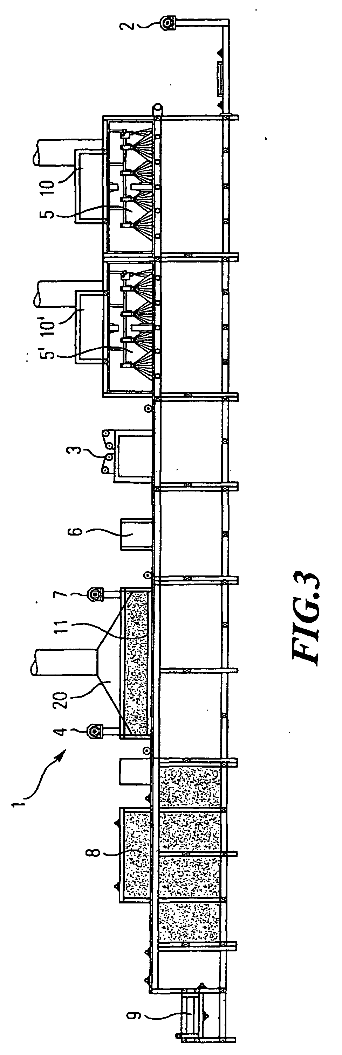

Im Folgenden wird auf die in Fig. 3 gezeigte weitere Ausführung der erfindungsgemäßen Textilbeschichtungs- und Textillaminier-Produktionsanlage 1 eingegangen, wobei nur die Unterschiede zum ersten Ausführungsbeispiel beschrieben sind. Zwischen der ersten Zuführeinheit 2 und der zweiten Zuführeinheit 3 sind zwei Auftragsverfahrensstationen (5,5') angeordnet. Dabei ist die der ersten Zuführeinheit 2 nachfolgende Auftragsverfahrensstation 5 als Sprüheinheit zum Auftragen von Dispersionsklebemitteln und lösemittelhaltigen Klebemitteln ausgestaltet, während die vor der zweiten Zuführeinheit 3 angeordnete Auftragsverfahrensstation 5' als Sprüheinheit zum Auftragen von thermoplastischen oder reaktiven Schmelzklebemitteln (Hotmelts) ausgestaltet ist. Diese zwei Auftragsverfahrensstationen 5,5' sind als austauschbare Moduleinheiten ausgeführt und mit Abzugsvorrichtungen 10,10' ausgestaltet. In dieser Ausführung der erfindungsgemäßen Textilbeschichtungs- und Textillaminier-Produktionsanlage 1 sind weiter die zweite Zuführeinheit 3 und die Trockenauftragseinheit 6 als einzelne austauschbare Moduleinheiten ausgeführt.

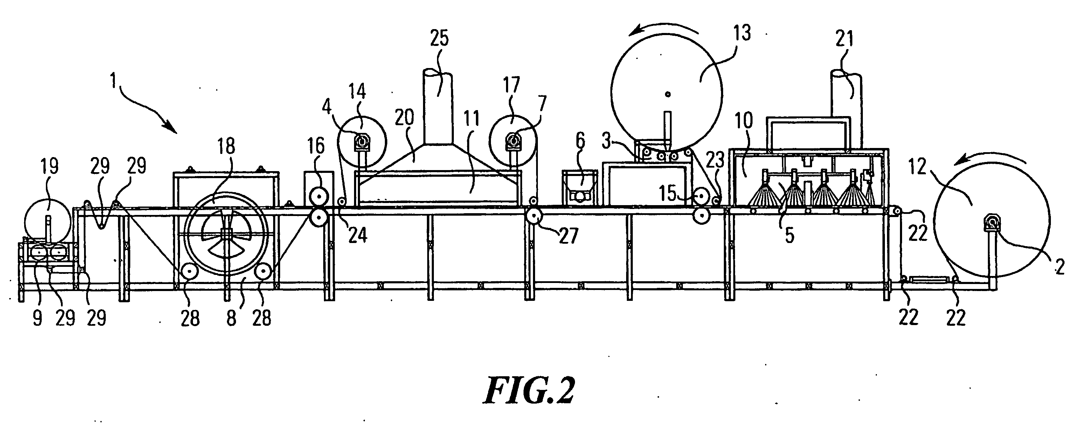

Die Fig. 2 zeigt die erfindungsgemäße Produktionsanlage 1 aus Fig. 1 in einem Betriebszustand. Auf der ersten Zuführeinheit 2 wird der Produktionsanlage ein erstes flexibles, bahnförmiges Substrat 12 von einem Coil zugeführt. Das erste Substrat 12 durchläuft die Auftragsverfahrensstation 5, wo es mit Klebemittel versehen wird. Ein zweites Substrat 13 wird an der zweiten Zuführstation 3 von einem weiteren Coil abgewickelt und dem mit Klebemittel versehenen ersten Substrat 12 zugeführt. Die beiden übereinander angeordneten Substrate 12, 13 durchlaufen zwei Kalandrierwalzen 15 bevor ihnen von der Trockenauftragseinheit 7 ein Klebevlies 17 zugeführt wird.

Das Klebevlies 17 liegt ebenfalls als Coil vor und wird von der Zuführeinheit 7 abgewickelt. Alternativ kann auch über das Trockenauftragswerk 6 Klebepulver auf das Bilaminat aus den Substraten 12 und 13 aufgebracht werden. Hiernach läuft das Laminat durch den Heizofen 11. An der Zuführeinheit 4 wird ein drittes flexibles Substrat 14 ebenfalls von einem Coil zugeführt. Zwei weitere Kalandrierwalzen 16 sind der Zuführung des dritten Substrats 14 nachgeschaltet. In der Kühleinheit 8 ist eine Kühlwalze 18 angeordnet. Das Mehrschichtlaminat ist zur Abkühlung um die Kühlwalze 18 herumgelegt. In der der Kühleinheit 8 anschließenden Aufwickelungseinheit 9 wickelt ein Coil das fertige Mehrschichtlaminat 19 auf.

Bei der Herstellung von Mehrschichtlaminaten mit mindestens einer textilen Schicht in der oben beschriebenen und in den Figuren 1 und 3 dargestellten Produktionsanlage wird ein erstes flexibles, bahnförmiges Substrat 12 von der Zuführeinheit 2 über einen Satz Zuführrollen 22 der ersten Auftragsverfahrensstation für Klebemittel 5 zugeführt. In der ersten Auftragsverfahrensstation 5, die als Sprüheinheit zum Auftragen von Dispersionsklebern, lösemittelhaltigen Klebern, thermoplastischen oder reaktiven Schmelzklebern (Hotmelts) ausgebildet ist, wird die erste Substratschicht 12 mit einer Klebemittelschicht versehen. Die bei dieser Auftragsverfahrensstation 5 entstehenden Belastungen der Raumluft durch Lösemittel oder Reaktionsprodukte werden durch eine Abzugsvorrichtung 10 aufgefangen und durch eine Abluftableitung 21 von der Produktionsanlage 1 vertikal oder horizontal weggeführt. Die mit einer Klebemittelschicht versehene erste Substratschicht 12 wird von der zweiten Zuführstation 3 mit einem weiteren Substrat 13 versehen, wobei das Substrat 13 über eine Laufrolle 23 auf die Klebemittelschicht gedrückt wird. Die beiden ersten Substrate 12, 13, und die dazwischen angeordnete Klebemittelschicht werden durch zwei Kalandrierwalzen 15 miteinander verpresst und dadurch sicher miteinander verbunden. Auf dieses Zweischichtlaminat lässt sich in der Trockenauftragseinheit 6 pulverförmiges Klebemittel auftragen. Alternativ zu dem Auftrag von pulverförmigem Klebemittel, in Fig. 2 dargestellt, wird an der als Zuführeinheit ausgebildeten Trockenauftragseinheit 7 ein Klebevlies 17, bzw. ein Klebefilm aufgetragen. Das Klebevlies oder der Klebefilm 17 wird durch zwei Laufrollen 27 dem Zweischichtlaminat zugeführt und auf dem selben angedrückt. Das in einer der Trockenauftragseinheiten 6, 7 mit einem Klebemittel versehene Zweischichtlaminat wird anschließend in einer Heizeinheit 11 durch ein IR-Wärmestrahlungsfeld erwärmt, wodurch der trocken aufgetragene Kleber aktiviert wird. Die Heizeinheit 11 ist mit einer Abzugsvorrichtung 20 versehen, die die im Bereich der Heizeinheit 11 bei der Erwärmung austretenden Ausgasungen durch eine Abluftleitung 25 von der Textilbeschichtungs- und Laminier-Produktionsanlage 1 horizontal oder vertikal wegführt. Nach der Heizeinheit 11 wird das Zweischichtlaminat mit einer weiteren Schicht eines Substrats 14 versehen. Das Substrat 14 wird von der Zuführeinheit 4 abgewickelt und über eine Laufrolle 24 auf die Klebefläche auf das Zweischichtlaminat aufgetragen. Zwei sich anschließende Kalandrierwalzen 16 verpressen das dritte Subtrat 14 mit dem schon verpressten Zweischichtlaminat zu einem fest miteinander verbundenen Dreischichtlaminat 19. Vor dem Aufwickeln des Dreischichtlaminats 19 durchläuft das Dreischichtlaminat 19 eine Kühleinheit 8 mit einer Kühltrommel 18. Die Kühltrommel 18 entzieht dem Mehrschichtlaminat 19 die in der Heizeinheit 11 aufgebrachte Wärme. In der Kühltrommel 18 wird die Wärme an ein Fluid abgeführt, mit dem Fluid aus der Kühltrommel 18 herausgeleitet und mittels Kühlgerät in die Kühltrommel 18 zurückgeführt. Neben einer solchen flüssigkeitsgekühlten Kühltrommel 18 mit einem geschlossenen Kühlkreislauf, die die Abfuhr großer Wärmemengen ermöglicht, werden bei einfachen Kühleinheiten 8 gelochte, luftdurchströmte Trommeln als Kühltrommeln 18 eingesetzt. Um eine möglichst große Übertragungsfläche zwischen Mehrschichtlaminat 19 und Kühltrommel 18, und damit eine gute Wärmeübertragung, zu ermöglichen, wird das Mehrschichtlaminat 19 durch zwei Zuführrollen 28 unterhalb der Achse der Kühltrommel 18 auf die Umfangsfläche der Kühltrommel 18 aufgelegt und wieder abgeführt. Nach der Abkühlungseinheit 8 wird das Mehrschichtlaminat 19 über einen Satz Zuführrollen 29 der Aufwicklungseinheit 9 zugeführt. Der Satz Zuführrollen 29 ermöglicht ein gleichmäßiges, mit gleichbleibender Spannung durchgeführtes Aufwickeln des Mehrschichtlaminats 19 auf ein Coil.

## Patentansprüche

1. Textilbeschichtungs- und Textillaminier-Produktionsanlage (1) zum Herstellen von Mehrschichtlaminaten und beschichteten Substraten mit mindestens einem textilen Substrat, mit mehreren Zuführeinheiten (2,3,4) zum Zuführen flexibler Substrate (12,13,14) einschließlich des textilen Substrats und mindestens zwei verschiedenen Auftragsverfahrensstationen (5,6,7) für Klebemittel zum Ausführen von mindestens zwei verschiedenen Auftragsverfahren,
**dadurch gekennzeichnet, dass** die Zuführeinheiten (2,3,4) und die Auftragsverfahrensstationen (5,6,7) jeweils als austauschbare Moduleinheiten ausgebildet sind, wobei eine erste Zuführeinheit (2) zum Zuführen eines ersten flexiblen Substrats (12) vor einer ersten Auftragsstation (5) zum Auftragen von Klebemittel in einem ersten Auftragsverfahren auf das erste Substrat (12) angeordnet ist, eine zweite Zuführeinheit (3) zum Zuführen eines zweiten flexiblen Substrats (13) vor einer zweiten Auftragsstation (6, 7) zum Auftragen von Klebemittel in einem zweiten, vom ersten Auftragsverfahren verschiedenen Auftragsverfahren auf das Bilaminat aus erstem und zweitem Substrat (12,13) sowie dazwischen liegendem Klebemittel angeordnet ist, und eine dritte Zuführeinheit (4) zum Zuführen eines dritten flexiblen Substrats (14) zu dem auf dem Bilaminat aufgetragenen Klebemittel angeordnet ist.

2. Produktionsanlage (1) nach Anspruch 1,
**dadurch gekennzeichnet, dass** eine der Auftragsverfahrensstationen (5,6,7) als Sprüheinheit zum Auftragen von Dispersionsklebemitteln oder lösungsmittelhaltigen Klebemitteln ausgebildet ist.

3. Produktionsanlage (1) nach Anspruch 1,
**dadurch gekennzeichnet, dass** eine der Auftragsverfahrensstationen (5,6,7) als Sprüheinheit zum Auftragen von thermoplastischen oder reaktiven Schmelzklebemitteln ausgebildet ist.

4. Produktionsanlage (1) nach einem der Ansprüche 1 bis 3,
**dadurch gekennzeichnet, dass** eine der Auftragsverfahrensstationen (5,6,7) als Trockenauftragseinheit zum Auftragen von pulverförmigen Klebemitteln ausgebildet ist.

5. Produktionsanlage (1) nach einem der Ansprüche 1 bis 4,
**dadurch gekennzeichnet, dass** eine der Auftragsverfahrensstationen (5,6,7) als Zuführeinheit zum Auftragen von Klebevliesen oder Klebefilmen ausgebildet ist.

6. Produktionsanlage (1) nach einem der Ansprüche 1 bis 5,
**dadurch gekennzeichnet, dass** die Auftragsverfahrensstationen (5,6,7) außer Funktion setzbar sind und die Substrate (12,13,14) durch die Auftragsverfahrenstationen (5,6,7) neutral hindurch führbar sind.

7. Produktionsanlage (1) nach einem der Ansprüche 1 bis 6,
**dadurch gekennzeichnet, dass** eine als austauschbare Moduleinheit ausgebildete Einheit (11) zum Erwärmen und/oder Trocknen der Substrate und Klebemittel vorgesehen ist.

8. Produktionsanlage (1) nach einem der Ansprüche 1 bis 7,
**dadurch gekennzeichnet, dass** eine als austauschbare Moduleinheit ausgebildete Abkühlungseinheit (8) vorgesehen ist.

9. Produktionsanlage (1) nach Anspruch 8,
**dadurch gekennzeichnet, dass** die Abkühlungseinheit (8) eine fluidgekühlte Trommel umfasst.

10. Produktionsanlage (1) nach Anspruch 8,
**dadurch gekennzeichnet, dass** die Abkühlungseinheit eine gelochte Trommel (18) umfasst.

11. Produktionsanlage (1) nach einem der Ansprüche 1 bis 10,
**dadurch gekennzeichnet, dass** die Moduleinheiten gegeneinander austauschbar ausgebildet sind.

12. Produktionsanlage (1) nach einem der Ansprüche 1 bis 11,
**dadurch gekennzeichnet, dass** die Moduleinheiten eine Rahmenkonstruktion umfassen.

13. Produktionsanlage (1) nach Anspruch 12,
**dadurch gekennzeichnet, dass** die Rahmenkonstruktionen der Moduleinheiten lösbar miteinander verbunden sind.

14. Produktionsanlage (1) nach einem der Ansprüche 12 oder 13,
**dadurch gekennzeichnet, dass** die Abmessungen der Moduleinheiten mit Rahmenkonstruktion so gewählt sind, dass die einzelnen Module oder die Module in Kombination durch die Tür eines Containers im Container für den Transport aufgenommen werden können.

15. Produktionsanlage (1) nach einem der Ansprüche 1 bis 14,
**dadurch gekennzeichnet, dass** für die Auftragsverfahrensstationen (5,6,7) eine Einheitslänge definiert ist, die der Länge der kürzesten Auftragsverfahrensstation (5,6,7) entspricht und im Wesentlichen sämtliche anderen Auftragsverfahrensstationen (5,6,7) eine Länge aufweisen, die der Einheitslänge oder einem ganzzahligen Vielfachen von dieser Einheitslänge entspricht.

16. Produktionsanlage (1) nach einem der Ansprüche 1 bis 15,
**dadurch gekennzeichnet, dass** folgende Moduleinheiten-Reihenfolge vorgesehen ist:
a) erste Zuführeinheit (2),
b) erste Auftragsverfahrensstation (5) für ein erstes Auftragsverfahren,
c) zweite Zuführeinheit (3),
d) erste Kalandrierwalzeneinheit (15),
e) zweite Auftragsverfahrensstation (6) bzw. dritte Auftragsverfahrensstation (7) für ein zweites, verschiedenes Auftragsverfahren,
f) Erwärmungs- und/oder Trocknungseinheit (11),
g) dritte Zuführeinheit (4),
h) zweite Kalandrierwalzeneinheit(16),
i) Abkühlungseinheit (8), und
j) Aufwicklungseinheit (9).

17. Produktionsanlage (1) nach Anspruch 16,
**dadurch gekennzeichnet, dass** die erste Auftragsverfahrensstation (5) zwei austauschbare, jeweils ein anderes Auftragsverfahren ausführende Moduleinheiten umfasst.

18. Produktionsanlage (1) nach einem der Ansprüche 16 oder 17,
**dadurch gekennzeichnet, dass** die als Zuführeinheit zum Auftragen von Klebevliesen oder Klebefilmen ausgebildete dritte Auftragsverfahrensstation (7), die Erwärmungseinheit (11) und die dritte Zuführeinheit (4) als eine Moduleinheit ausgebildet sind.

19. Produktionsanlage (1) nach einem der Ansprüche 16 bis 18,
**dadurch gekennzeichnet, dass** die erste Auftragsverfahrensstation (5) und die Erwärmungseinheit (11) jeweils mindestens eine Abzugsvorrichtung (10,20) aufweisen.

20. Produktionsanlage (1) nach einem der Ansprüche 1 bis 19,
**dadurch gekennzeichnet, dass** die Moduleinheiten in ihrer Reihenfolge austauschbar ausgebildet sind.

21. Produktionsanlage (1) nach einem der Ansprüche 1 bis 20,
**dadurch gekennzeichnet, dass** die Produktionsanlage (1) mit einer SPS-Steuerung ausgestaltet ist.

22. Verfahren zum Herstellen von Mehrschichtlaminaten in einer Textilbeschichtungs- und Textillaminier-Produktionsanlage (1) nach einem der Ansprüche 1 bis 21, bei dem mehrere Substrate, einschließlich mindestens eines textilen Substrats, unter Zwischenfügen einer Klebemittelschicht miteinander verbunden werden und die Klebemittelschicht vor dem Zusammenfügen von zwei Substraten aufgebracht wird, wobei mindestens zwei verschiedene Klebemittel-Auftragsverfahren angewendet werden,
**dadurch gekennzeichnet, dass** in einem Durchlauf auf ein erstes flexibles Substrat (12) in einem ersten Auftragsverfahren eine erste Klebemittelschicht aufgetragen wird, ein zweites flexibles Substrat (13) zugeführt wird, und das erste und zweite flexible Substrat miteinander verbunden werden, und in einem zweiten, vom ersten Auftragsverfahren verschiedenen Auftragsverfahren eine zweite Klebemittelschicht aufgetragen wird, der ein drittes flexibles Substrat (14) zugeführt wird, wobei die zweite Klebemittelschicht von der ersten Klebemittelschicht durch ein Substrat getrennt ist.

## Claims

1. Textile coating and textile laminating production plant (1) for producing multilayer laminates and coated substrates with at least one textile substrate, comprising a plurality of feed units (2, 3, 4) for feeding flexible substrates (12, 13, 14), including the textile substrate, and at least two different application process stations (5, 6, 7) for adhesives for carrying out at least two different application processes, **characterised in that** the feed units (2, 3, 4) and the application process stations (5, 6, 7) are respectively constructed as exchangeable modular units, a first feed unit (2) for feeding a first flexible substrate (12) being arranged upstream of a first application station (5) for applying adhesive onto the first substrate (12) in a first application process, a second feed unit (3) for feeding a second flexible substrate (13) being arranged upstream of a second application station (6, 7) for applying adhesive onto the bilaminate, of the first and second substrates (12, 13) and adhesive located therebetween, in a second application process, which is different from the first application process, and a third feed unit (4) being arranged for feeding a third flexible substrate (14) to the adhesive applied to the bilaminate.

2. Production plant (1) according to claim 1, **characterised in that** one of the application process stations (5, 6, 7) is constructed as a spray unit for applying dispersion adhesives or solvent-containing adhesives.

3. Production plant (1) according to claim 1, **characterised in that** one of the application process stations (5, 6, 7) is constructed as a spray unit for applying thermoplastic or reactive hot-melt adhesives.

4. Production plant (1) according to any one of claims 1 to 3, **characterised in that** one of the application process stations (5, 6, 7) is constructed as a dry application unit for applying powder adhesives.

5. Production plant (1) according to any one of claims 1 to 4, **characterised in that** one of the application process stations (5, 6, 7) is constructed as a feed unit for applying adhesive nonwovens or adhesive films.

6. Production plant (1) according to any one of claims 1 to 5, **characterised in that** the application process stations (5, 6, 7) may be deactivated and the substrates (12, 13, 14) may be guided inactively through the application process stations (5, 6, 7).

7. Production plant (1) according to any one of claims 1 to 6, **characterised in that** a unit (11), which is constructed as an exchangeable modular unit, is provided for heating and/or drying the substrates and adhesives.

8. Production plant (1) according to any one of claims 1 to 7, **characterised in that** a cooling unit (8), which is constructed as an exchangeable modular unit, is provided.

9. Production plant (1) according to claim 8, **characterised in that** the cooling unit (8) comprises a fluid-cooled drum.

10. Production plant (1) according to claim 8, **characterised in that** the cooling unit comprises a perforated drum (18).

11. Production plant (1) according to any one of claims 1 to 10, **characterised in that** the modular units are mutually interchangeable.

12. Production plant (1) according to any one of claims 1 to 11, **characterised in that** the modular units comprise a frame construction.

13. Production plant (1) according to claim 12, **characterised in that** the frame constructions of the modular units are detachably connected to one another.

14. Production plant (1) according to either claim 12 or claim 13, **characterised in that** the dimensions of the modular units comprising the frame construction are selected such that the individual modules or the modules in combination may be received through the door of a container in the container for transportation.

15. Production plant (1) according to any one of claims 1 to 14, **characterised in that** a unit length that corresponds to the length of the shortest application process station (5, 6, 7) is defined for the application process stations (5, 6, 7), and substantially all of the other application process stations (5, 6, 7) exhibit a length that corresponds to the unit length or an integral multiple of this unit length.

16. Production plant (1) according to any one of claims 1 to 15, **characterised in that** the following modular unit sequence is provided:
a) first feed unit (2),
b) first application process station (5) for a first application process,
c) second feed unit (3),
d) first calender roll unit (15),
e) second application process station (6) or third application process station (7) for a second, separate application process,
f) heating and/or drying unit (11),
g) third feed unit (4),
h) second calender roll unit (16),
i) cooling unit (8) and
j) take-up unit (9).

17. Production plant (1) according to claim 16, **characterised in that** the first application process station (5) comprises two exchangeable modular units, each of which carries out a different application process.

18. Production plant (1) according to either claim 16 or claim 17, **characterised in that** the third application process station (7), which is constructed as a feed unit for applying adhesive nonwovens or adhesive films, the heating unit (11) and the third feed unit (4) are constructed as a modular unit.

19. Production plant (1) according to any one of claims 16 to 18, **characterised in that** the first application process station (5) and the heating unit (11) each comprise at least one take-off device (10, 20).

20. Production plant (1) according to any one of claims 1 to 19, **characterised in that** the modular units are exchangeable in their sequence.

21. Production plant (1) according to any one of claims 1 to 20, **characterised in that** the production plant (1) has a programmable control plant.

22. Method for producing multilayer laminates in a textile coating and a textile lamination production plant (1) according to any one of claims 1 to 21, wherein a plurality of substrates, including at least one textile substrate, are connected to one another with the insertion of an adhesive layer, and the adhesive layer is applied prior to the joining of two substrates, at least two different adhesive application processes being used, **characterised in that**, in a single pass in a first application process, a first adhesive layer is applied to a first flexible substrate (12), a second flexible substrate (13) is supplied, and the first and second flexible substrates are connected to each other and, in a second application process, which is different from the first application process, a second adhesive layer, to which a third flexible substrate (14) is fed, is applied, the second adhesive layer being separated from the first adhesive layer by a substrate.

## Revendications

1. Unité de production pour le revêtement et le feuilletage de textiles (1), destinée à réaliser des feuilletés multicouches et des substrats revêtus avec au moins un substrat textile, comportant plusieurs unités d'acheminement (2, 3, 4) destinées à acheminer des substrats (12, 13, 14) flexibles, y compris le substrat textile, et au moins deux postes d'enduction (5, 6, 7) différents pour le dépôt de la colle, destinés à exécuter au moins deux procédés d'enduction différents, **caractérisée en ce que** les unités d'acheminement (2, 3, 4) et les postes d'enduction (5, 6, 7) sont conçus respectivement sous forme d'unités modulaires interchangeables, une première unité d'acheminement (2), destinée à acheminer un premier substrat (12) flexible, étant agencée en amont d'un premier poste d'enduction (5) destiné enduire le premier substrat (12) de colle au cours d'un premier procédé d'enduction, une deuxième unité d'acheminement (3), destinée à acheminer un deuxième substrat (13) flexible, étant agencée en amont d'un deuxième poste d'enduction (6, 7) destiné enduire de colle au cours d'un deuxième procédé d'enduction, différent du premier procédé d'enduction, sur le bi-feuilleté formé par le premier et le deuxième substrat (12, 13), ainsi que par la colle intercalée entre lesdits deux substrats, et une troisième unité d'acheminement (4) étant agencée pour acheminer un troisième substrat flexible (14) vers la colle déposée sur le bi-feuilleté.

2. Unité de production (1) selon la revendication 1, **caractérisée en ce que** l'un des postes d'enduction (5, 6, 7) est conçu sous forme d'unité de pulvérisation destinée à déposer des colles sous forme de dispersion ou des colles contenant des solvants.

3. Unité de production (1) selon la revendication 1, **caractérisée en ce que** l'un des postes d'enduction (5, 6, 7) est conçu sous forme d'unité de pulvérisation destinée à déposer des colles thermoplastiques ou des colles liquides réactives.

4. Unité de production (1) selon l'une quelconque des revendications 1 à 3, **caractérisée en ce que** l'un des postes d'enduction (5, 6, 7) est conçu sous forme d'unité de dépôt à sec, destinée à déposer des colles sous forme de poudre.

5. Unité de production (1) selon l'une quelconque des revendications 1 à 4, **caractérisée en ce que** l'un des postes d'enduction (5, 6, 7) est conçu sous forme d'unité d'acheminement destinée à déposer des non-tissés adhésifs ou des couches adhésives.

6. Unité de production (1) selon l'une quelconque des revendications 1 à 5, **caractérisée en ce que** les postes d'enduction (5, 6, 7) peuvent être mis hors service et les substrats (12, 13, 14) peuvent être acheminés de manière neutre à travers les postes d'enduction (5, 6, 7).

7. Unité de production (1) selon l'une quelconque des revendications 1 à 6, **caractérisée en ce qu'**une unité (11), conçue sous forme d'unité modulaire interchangeable, est prévue pour le chauffage et/ou séchage des substrats et colles.

8. Unité de production (1) selon l'une quelconque des revendications 1 à 7, **caractérisée en ce qu'**il est prévu une unité de refroidissement (8) conçue sous forme d'unité modulaire interchangeable.

9. Unité de production (1) selon la revendication 8, **caractérisée en ce que** l'unité de refroidissement (8) comporte un tambour refroidi par fluide.

10. Unité de production (1) selon la revendication 8, **caractérisée en ce que** l'unité de refroidissement comporte un tambour perforé (18).

11. Unité de production (1) selon l'une quelconque des revendications 1 à 10, **caractérisée en ce que** les unités modulaires sont conçues de manière interchangeable.

12. Unité de production (1) selon l'une quelconque des revendications 1 à 11, **caractérisée en ce que** les unités modulaires comportent une construction formant un châssis.

13. Unité de production (1) selon la revendication 12, **caractérisée en ce que** les châssis des unités modulaires sont assemblés de manière amovible entre eux.

14. Unité de production (1) selon la revendication 12 ou 13, **caractérisée en ce que** les dimensions des unités modulaires avec la construction formant un châssis sont choisies de telle sorte que les modules individuels ou les modules combinés peuvent passer à travers la porte d'un conteneur pour être reçus à l'intérieur du conteneur pendant le transport.

15. Unité de production (1) selon l'une quelconque des revendications 1 à 14, **caractérisée en ce que**, pour les postes d'enduction (5, 6, 7), il est défini une longueur unitaire qui correspond à la longueur du poste d'enduction (5, 6, 7) le plus court et sensiblement tous les autres postes d'enduction (5, 6, 7) ont une longueur qui correspond à la longueur unitaire ou à un multiple entier de cette longueur unitaire.

16. Unité de production (1) selon l'une quelconque des revendications 1 à 15, **caractérisée en ce que** les unités modulaires sont prévues dans l'ordre de succession suivant :
a) première unité d'acheminement (2),
b) premier poste d'enduction (5) pour un premier procédé d'enduction,
c) deuxième unité d'acheminement (3),
d) première unité de calandrage (15),
e) deuxième poste d'enduction (6) et éventuellement troisième poste d'enduction (7) pour un deuxième procédé d'enduction différent,
f) unité de chauffage et/ou de séchage (11),
g) troisième unité d'acheminement (4),
h) deuxième unité de calandrage (16),
i) unité de refroidissement (8), et
j) unité de bobinage (9).

17. Unité de production (1) selon la revendication 16, **caractérisée en ce que** le premier poste d'enduction (5) comporte deux unités modulaires interchangeables, exécutant chacune un autre procédé d'enduction.

18. Unité de production (1) selon la revendication 16 ou 17, **caractérisée en ce que** le troisième poste d'enduction (7), conçu sous forme d'unité d'acheminement pour le dépôt de non-tissés adhésifs ou de couches adhésives, l'unité de chauffage (11) et la troisième unité d'acheminement (4) sont réalisés sous forme d'une unité modulaire.

19. Unité de production (1) selon l'une quelconque des revendications 16 à 18, **caractérisée en ce que** le premier poste d'enduction (5) et l'unité de chauffage (11) comportent respectivement au moins un dispositif d'évacuation (10, 20).

20. Unité de production (1) selon l'une quelconque des revendications 1 à 19, **caractérisée en ce que** les unités modulaires sont interchangeables dans leur ordre de succession.

21. Unité de production (1) selon l'une quelconque des revendications 1 à 20, **caractérisée en ce que** l'unité de production (1) est équipée d'une commande programmable.

22. Procédé de réalisation de laminés multicouches dans une unité de production pour le revêtement et le feuilletage de textiles (1) selon l'une quelconque des revendications 1 à 21, dans lequel plusieurs substrats, y compris au moins un substrat textile, sont assemblés entre eux en intercalant une couche de colle et la couche de colle est déposée avant l'assemblage de deux substrats, au moins deux procédés différents d'enduction de la colle étant utilisés, **caractérisé en ce que**, en un passage, une première couche de colle est déposée sur un premier substrat (12) flexible au cours d'un premier procédé d'enduction, un deuxième substrat (13) flexible est acheminé et le premier et le deuxième substrat flexible sont assemblés l'un à l'autre, et au cours d'un deuxième procédé d'enduction, différent du premier procédé d'enduction, est déposée une deuxième couche de colle vers laquelle est acheminée un troisième substrat (14) flexible, la deuxième couche de colle étant séparée de la première couche de colle par un substrat.
